# EUROPÄISCHE PATENTSCHRIFT

(11) **EP 3 878 654 B1**
(45) Veröffentlichungstag und Bekanntmachung des Hinweises auf die Patenterteilung: **30.03.2022**
(21) Anmeldenummer: 20162315.4
(22) Anmeldetag: 11.03.2020
(51) Int. Cl.: B41J 2/175, G01F 23/296

(54) **VORRICHTUNG ZUM MESSEN DES PEGELS EINER SCHAUMBILDENDEN TINTE FÜR EINE TINTENDRUCKMASCHINE**
DEVICE FOR MEASURING THE LEVEL OF A FOAM-FORMING INK FOR AN INK JET PRINTING MACHINE
DISPOSITIF DE MESURE DU NIVEAU D'UNE ENCRE MOUSSANTE POUR UNE MACHINE D'IMPRESSION À JET D'ENCRE

(43) Veröffentlichungstag der Anmeldung: 15.09.2021
(73) Patentinhaber: Heidelberger Druckmaschinen AG, 69115 Heidelberg (DE)
(72) Erfinder: Fischer, Jörg-Achim, 24235 Laboe (DE); Schoepke, Michael, 24223 Schwentinental (DE)

(56) Entgegenhaltungen:
- EP-A1- 0 697 583
- EP-B1- 2 041 530
- US-A1- 2005 001 863

## Beschreibung

### Erfindung

Die Erfindung betrifft eine Vorrichtung mit den Merkmalen des Oberbegriffs von Anspruch 1.

### Technisches Gebiet

Die Erfindung liegt auf dem technischen Gebiet der grafischen Industrie und dort insbesondere im Bereich des industriellen, d.h. hochproduktiven Tintendrucks (Inkjet) auf flache Substrate, d.h. des bildgemäßen Auftragens von feinsten Tropfen aus flüssiger Tinte auf bogen-, bahn-, folien- oder etikettenförmige Bedruckstoffe, bevorzugt aus Papier, Karton, Pappe, Kunststoff, Metall oder Verbundmaterial. Im Besonderen liegt die Erfindung dabei auf dem Teilgebiet des Bevorratens von flüssiger Tinte und des Versorgens von die Tintentropfen erzeugenden Druckköpfen mit flüssiger Tinte.

### Stand der Technik

In Tintenversorgungseinrichtungen kann es insbesondere beim Einlassen von Tinte zu Schaumbildung kommen. Schaum an der Oberfläche der Tinte kann Messungen, z.B. Ultraschall-gestützte Pegelmessungen, nachteilig beeinflussen und insbesondere verfälschen. Wünschenswert wäre das vollständige Vermeiden von Schaumbildung oder die vollständige Beseitigung von bereits gebildetem Schaum; beides wäre allerdings technisch sehr aufwendig. Eine unwesentliche Menge von Schaum wird daher oft toleriert.

Die EP 2 041 530 B1 offenbart eine gattungsgemäße Vorrichtung zum bevorzugt fehlerfreien Messen des Pegels einer schaumbildenden Flüssigkeit mit zwei Kammern, einer Trenneinrichtung und einem Ultraschallsensor. Eine solche Lösung kann aber nachteilig sein, denn sie liefert nur den Wert für den Pegel und keine anderen Informationen.

### Aufgabe

Es ist daher eine Aufgabe der vorliegenden Erfindung, eine Verbesserung gegenüber dem Stand der Technik zu schaffen, welche es insbesondere ermöglicht, den Pegels einer schaumbildenden Tinte fehlerfrei zu messen und gleichzeitig Informationen über bereits gebildeten Schaum zu erlangen.

### Erfindungsgemäße Lösung

Diese Aufgabe wird erfindungsgemäß durch eine Vorrichtung nach Anspruch 1 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Messen des Pegels einer schaumbildenden Tinte für eine Tintendruckmaschine, umfassend zwei mit der Tinte befüllbare und zum Austausch der Tinte miteinander über eine Öffnung verbundene Kammern, d.h. eine erste Kammer als Hauptkammer und eine zweite Kammer als Nebenkammer, wobei die Hauptkammer einen Tintenvorrat aufnimmt und der Nebenkammer ein Sensor zugeordnet ist, welcher einen Pegel einer schaumfreien Oberfläche der Tinte in der Nebenkammer, d.h. einen Pegelmesswert, misst, zeichnet sich dadurch aus, dass der ersten Kammer entweder ebenfalls der Sensor oder ein weiterer Sensor zugeordnet ist, wobei der Sensor oder der weitere Sensor einen weiteren Pegel einer potentiell Schaum tragenden Oberfläche der Tinte in der Hauptkammer, d.h. einen weiteren Pegelmesswert, misst; und dass ein Rechner vorhanden ist, welcher den Pegelmesswert und den weiteren Pegelmesswert zur Bestimmung des Vorhandenseins von Schaum, der Höhe eines vorhandenen Schaums und/oder der Art eines vorhandenen Schaums rechentechnisch verarbeitet.

Die Erfindung ermöglicht es in vorteilhafter Weise, den Pegels einer schaumbildenden Tinte fehlerfrei zu messen und gleichzeitig Informationen über bereits gebildeten Schaum zu erlangen.

Die Erfindung ermöglicht es dabei in vorteilhafter Weise, das Vorhandenseins von Schaum, die Höhe eines vorhandenen Schaums und/oder die Art eines vorhandenen Schaums rechentechnisch zu bestimmen. Schaumbildung kann auf diese Weise frühzeitig erkannt werden und durch den Schaum hervorgerufene Fehler bei der Versorgung von Druckköpfen mit Tinte, z.B. deren Ausfall, kann verhindert werden.

Aus diesen Informationen können erforderliche Maßnahmen abgeleitet werden, z.B. das Ablassen und Neueinfüllen der Tinte, um den bereits gebildeten Schaum zu entfernen, oder eine Warnung, z.B. eine optische oder akustische.

Bevorzugt kommen zwei Sensoren zum Einsatz. Es ist aber auch möglich, nur einen Sensor zu verwenden und mit diesem an zwei Messstellen (in jeder der beiden Kammern eine Messstelle) zu messen. Beispielsweise kann der Sensor hin- und herbewegt werden oder die Messstrahlung wird umgelenkt, bevorzugt mit einem oder mehreren Spiegeln.

Die Hauptkammer hat bevorzugt ein größeres Volumen zur Aufnahme von Tinte als die Nebenkammer (daher die Namensgebungen, d.h. die Nebenkammer muss nicht neben der Hauptkammer angeordnet sein). Die Hauptkammer kann auch als Vorratskammer oder - behälter bezeichnet werden. Die Nebenkammer kann auch als Messkammer bezeichnet werden. Beide Kammern, insbesondere deren Böden, können in gleicher Höhe angeordnet sein und können gleiche Kammerhöhen aufweisen.

Die Haupt- und die Nebenkammer sind über die Öffnung oder mehrere Öffnungen miteinander verbunden, d.h. Tinte kann im Wesentlichen ungehindert von einer Kammer in die andere fließen. Die Pegel der beiden jeweiligen Tintenoberflächen (z.B. eine ohne Schaum und eine mit Schaum auf dem Pegel) in den beiden Kammern sind daher gleich. Eine unwesentliche Absenkung des Pegels in der Hauptkammer durch die Schaumbildung kann vernachlässigt werden.

Die Öffnung befindet sich bevorzugt nahe beim Boden der beiden Kammern. Auf diese Weise kann verhindert werden, dass Schaum oder einzelne Blasen in die Nebenkammer gelangen. Hierzu bevorzugt ist die Öffnung nur ein kleines Loch oder ein kleiner Spalt oder ein Labyrinth. Es kann auch eine Einrichtung zu Beseitigung von Schaum bei der Öffnung vorgesehen ein.

Die beiden Pegelmesswerte können bevorzugt wie folgt rechentechnisch verarbeitet werden:
P1 sei der (erste) Pegelmesswert, gemessen mit dem (ersten) Sensor in der Nebenkammer; und
P2 sei der (zweite) weitere Pegelmesswert, gemessen mit dem ersten Sensor oder dem (zweiten) weiteren Sensor in der Hauptkammer.
Und es sei Delta_P = P1 - P2.
Ist Delta P = 0, so ist kein Schaum vorhanden und der gemessene Pegel korrekt.
Ist Delta P > 0, so ist z.B. Schaum in der Nebenkammer, was nicht vorkommen sollte, oder z.B. reflektierender Schaum in der Hauptkammer.
Ist Delta P < 0, so ist z.B. Schaum in der Hauptkammer

Oder bei Vorgabe von Toleranzwerten für die Schaumbildung: +/- Toleranz_P:
Ist -Toleranz_P < Delta_P < +Toleranz_P, so ist kein Schaum vorhanden und der gemessene Pegel korrekt.
Ist Delta_P > +Toleranz_P, so ist z.B. Schaum in der Nebenkammer, was nicht vorkommen sollte, oder z.B. reflektierender Schaum in der Hauptkammer.
Ist Delta_P < - Toleranz P, so ist z.B. Schaum in der Hauptkammer

Messwerte für P1 und/oder P2 außerhalb eines vorgegebenen Bereichs von bevorzugt 0 bis zur maximalen Füllhöhe, z.B. 200 mm, können für die Berechnungen fiktiv z.B. auf 1000 mm gesetzt werden.

Der Absolutwert von Toleranz_P kann z.B. auf bevorzugt 2 mm gesetzt werden.

Nachfolgend vier Beispiele:
P1 = 103 mm, P2 = 104 mm, Delta_P = -1 mm.
   In diesem Beispiel ist kein Schaum vorhanden (bzw. innerhalb der vorgegebenen Toleranz) und der Pegel ist 103 mm.
P1 = 103 mm, P2 = fiktiv 1000 mm, Delta_P= -897 mm.
   In diesem Beispiel ist (eine unbekannte Menge) Schaum vorhanden und der Pegel ist 103 mm.
P1 = 103 mm, P2 = 110 mm, Delta_P = -7 mm.
   In diesem Beispiel ist 7 mm Schaum vorhanden und der Pegel ist 103 mm. In diesem Bespiel ist z.B. Schaum vorhanden, welcher den Ultraschall vorwiegend absorbiert (Problem: Absorption).
P1 = 103 mm, P2 = 90 mm, Delta_P = 13 mm.
   In diesem Beispiel ist Schaum vorhanden und der Pegel ist 103 mm. In diesem Bespiel ist z.B. Schaum vorhanden, welcher den Ultraschall vorwiegend reflektiert (Problem: Reflexion).

Es ist in vorteilhafter Weise auch möglich, die Messwerte des messendes Sensors über die Messzeit zu integrieren. Dies ist von Vorteil, denn es kann dabei Schaum bzw. es können dabei Blasen erfasst werden, welcher/welche sich während der Messzeit am Messort des messenden Sensors entlang bewegt/bewegen. Eine solche Messung kann aussagekräftiger und/oder genauer sein, als eine Messung zu einem Zeitpunkt und/oder bei unbewegtem Schaum/unbewegten Blasen.

Im Normalbetrieb einer Tintenversorgungseinrichtung tritt pro Zeiteinheit keine oder nur eine kleine und daher tolerierbare Menge Schaum und/oder einzelne Blasen auf:
Das Signal Q(t) = Integral (P2/P1) dt beträgt Q(t) = 1 im Normalbetrieb.

Mit zunehmender Schaumbildung weicht Q(t) vom Wert 1 ab.

Es kann für Q(t) eine Schranke S vorgegeben werden, z.B. S = 0,9, so dass bei Unterschreiten der Schranke Schaum erkannt und z.B. gemeldet wird.

### Weiterbildungen

Im Folgenden werden bevorzugte Weiterbildung der Erfindung (kurz: Weiterbildungen) beschrieben.

Eine Weiterbildung kann sich dadurch auszeichnen, dass beide Sensoren als Ultraschallsensoren ausgebildet sind. Beide Sensoren arbeiten somit in vorteilhafter Weise berührungslos. Auf diese Weise ist ein großer Füllstandsbereich problemlos handhabbar bzw. überwachbar, bevorzugt von 0 bis etwa 200 mm. Auf diese Weise ist auch eine hohe Messgenauigkeit erreichbar, bevorzugt im Bereich von 0,1 mm Auflösung (Pegelhöhe). Zur Messung wird die Laufzeit eines Signals zwischen erzeugtem Ultraschallimpuls und dessen Echo ausgewertet. Der jeweilige Sensor liefert bevorzugt einen bereits aus der Laufzeit errechneten Abstandswert (Abstand Sensor zur zu vermessenden Oberfläche) an den Rechner. Der Abstandswert entspricht bevorzugt dem vertikalen Abstand bzw. der hierzu korrelierenden Höhenposition der zu vermessenden Tintenoberfläche oder des Schaums relativ zur Höhenposition des Sensors oder z.B. dem Boden der jeweiligen Kammer.

Aus der Art des Signals kann bevorzugt auch auf die Art des Schaums rechentechnisch ermittelt werden. Erstens kann beispielsweise aus der Dämpfung oder Streuung des Signals die durchschnittliche Blasengröße des Schaums rechentechnisch ermittelt werden. Hierzu kann der Rechner das Signal mit gespeicherten Signalen von bekannten Arten von Schaum vergleichen. Zweitens kann beispielsweise aus der Dämpfung oder Streuung des Signals die Dimensionalität des Schaums rechentechnisch ermittelt werden. Hierzu kann der Rechner das Signal mit gespeicherten Signalen von bekannten Arten von Schaum vergleichen. Der Schaum kann z.B. eher 2-dimensional (im Wesentlichen nur eine oder sehr wenige horizontale Lagen von Blasen) oder eher 3-dimensional sein (viele horizontale Lagen von Blasen übereinander).

Anstelle von Ultraschall kann auch elektromagnetische Strahlung verwendet werden, bevorzugt Licht oder Mikrowellen. Es kann auch vorgesehen sein, einen Ultraschallsensor und einen anderen Sensor zu verwenden.

Eine Weiterbildung kann sich dadurch auszeichnen, dass beide Sensoren oberhalb der beiden Oberflächen angeordnet sind. Die Sensoren messen hierbei bevorzugt von oben, d.h. durch die Luft hindurch.

Eine Weiterbildung kann sich dadurch auszeichnen, dass zwischen den beiden Kammern eine Trennwand vorhanden ist. Die Trennwand kann ein Blech sein. Anstelle einer Trennwand kann es auch vorgesehen sein, dass jede Kammer eine separate Wand aufweist und die beiden Kammern z.B. durch einen Schlauch oder ein Rohr oder ein Kanal zwischen den beiden Wänden miteinander verbunden sind (nach dem Prinzip der kommunizierenden Röhren).

Eine Weiterbildung kann sich dadurch auszeichnen, dass die Öffnung in der Trennwand und unter beiden Oberflächen der Tinte gebildet ist. Auf diese Weise kann erreicht werden, dass sich in der Nebenkammer kein Schaum bzw. keine einzelne Blasen oder nur eine unwesentliche Menge davon befinden. In der Nebenkammer ist somit in vorteilhafter Weise eine fehlerfreie oder nahezu fehlerfreie Pegelmessung der Tintenoberfläche möglich.

Eine Weiterbildung kann sich dadurch auszeichnen, dass die Hauptkammer eine Zuleitung und eine Ableitung für die Tinte aufweist. Der Ort der Zuleitung ist bevorzugt vom Ort des Messens in der Hauptkammer entfernt, z.B. einige Zentimeter bis 50 cm. Am Ort der Zuleitung kann potenziell Schaum entstehen. Der gebildete Schaum kann in die Hauptkammer fließen. In der Hauptkammer fließt die Tinte vom Ort der Zuleitung zum Ort der Ableitung. In vorteilhafter Weise fließt somit bereits gebildeter Schaum oder einzelne Blasen bevorzugt durch die Kammer und bevorzugt am Sensor bzw. dessen Messort entlang. Schaum oder einzelne Blasen werden auf diese Weise sicher erfasst. Es kann auch vorgesehen sein, den Fluss der Tinte und damit die Bewegung des Schaums oder der Blasen am Sensor vorbei aktiv zu erhöhen, z.B. durch ein Förderelement und/oder eine Pumpe in der Hauptkammer. Die Zuleitung kann einen Schlauch außerhalb der Hauptkammer umfassen und/oder ein vertikales Rohrstück bis knapp über den Kammerboden innerhalb der Hauptkammer umfassen. Die Ableitung kann einen Schlauch außerhalb der Hauptkammer umfassen. Der ableitende Schlauch kann zu einem Druckkopf führen. Alternativ kann der ableitende Schlauch zu einem Tintenverteiler für eine Vielzahl von Druckköpfen führen. Ein weiterer Schlauch kann nicht verdruckte Tinte zurück zur Zuleitung führen (Prinzip der zirkulierenden Tintenversorgung). In wenigstens einer der Leitungen kann eine Pumpe vorgesehen sein.

Eine Weiterbildung kann sich dadurch auszeichnen, dass die Ableitung mit einem Druckkopf verbunden ist.

Eine Weiterbildung kann sich dadurch auszeichnen, dass der Rechner wenigstens den weiteren Pegelmesswert zur Bestimmung des Vorhandenseins von Schaum, der Höhe eines vorhandenen Schaums und/oder der Art eines vorhandenen Schaums rechentechnisch integriert, d. h. rechentechnisch eine mathematische Integration des weiteren Pegelmesswerts über die Zeit durchführt.

Noch eine Weiterbildung kann sich dadurch auszeichnen, dass die Vorrichtung ein Gehäuse umfasst und dass das Gehäuse wenigstens eine Be- und/oder Entlüftung aufweist. Auf diese Weise kann die Tinte widerstandslos eingelassen und ausgelassen werden. Die Be- und/oder Entlüftung kann einen Luftfilter umfassen. Das Gehäuse kann aus Blech gefertigt sein und z.B. kastenförmig mit einem durchgehenden Boden und einer Trennwand mit Öffnung sein.

Eine Weiterbildung kann sich dadurch auszeichnen, dass die erste Kammer als ein Vorratsbehälter für Tinte einer Tintendruckmaschine ausgebildet ist.

Eine Weiterbildung kann sich dadurch auszeichnen, dass die Vorrichtung Teil einer Tintenversorgungseinrichtung für eine Tintendruckmaschine ist.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele

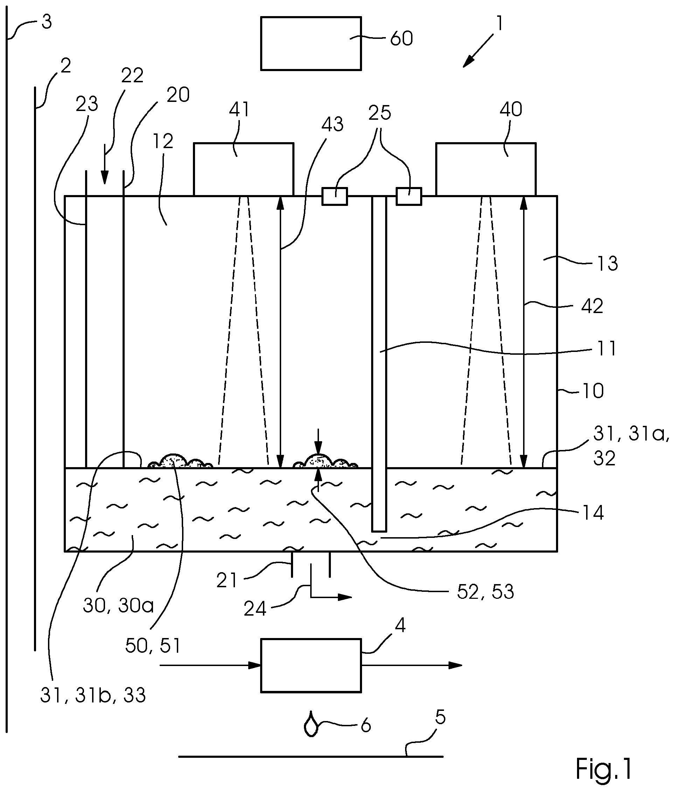

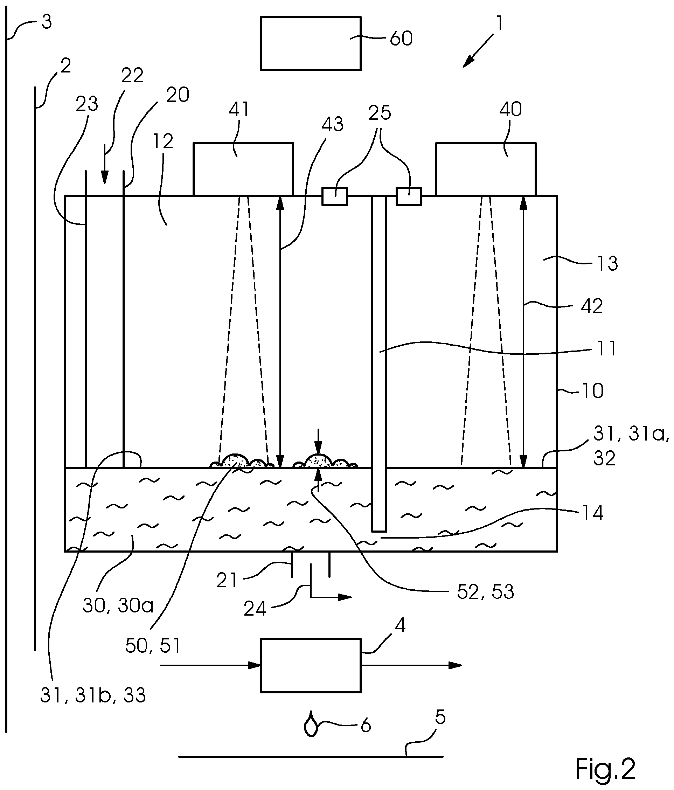

Die Figuren 1 und 2 zeigen ein bevorzugtes Ausführungsbeispiel der Erfindung und der Weiterbildungen. Einander entsprechende Merkmale sind in den Figuren mit denselben Bezugszeichen versehen.

Figur 1 und Figur 2 zeigen ein bevorzugtes Ausführungsbeispiel einer erfindungsgemäßen Vorrichtung in zwei verschiedenen Messsituationen.

Die Vorrichtung 1 kann Teil einer Einrichtung 2 zur Tintenversorgung sein. Letztere kann Teil einer (industriellen) Tintendruckmaschine 3 mit wenigstens einem Druckkopf 4, bevorzugt mit einer Vielzahl von Druckköpfen, sein. Es wird Bedruckstoff 5, z.B. Papier, Karton oder Folie, mit Tinte 6 bedruckt.

Die Vorrichtung 1 umfasst ein Gehäuse 10, z.B. aus Blech, mit einer innen angeordneten Trennwand 11, ebenfalls z.B. aus Blech. Die Vorrichtung umfasst eine erste Kammer 12 (oder Hauptkammer oder Vorratsbehälter) und eine zweite Kammer 13 (oder Nebenkammer). Die Trennwand trennt die beiden Kammern voneinander und weist eine Öffnung 14 auf. Tinte 30 kann durch die Öffnung zwischen den Kammern hin- und herfließen. Die Öffnung befindet sich nahe am Boden der Kammern und unterhalb der Tintenoberfläche.

Die Vorrichtung 1 umfasst einen Einlass 20 mit einer Zuleitung 22 und einem vertikalen, bis fast zum Boden reichenden Rohrstück 23 und einen Auslass 21 mit einer Ableitung 24 für die Tinte 30. Der Auslass ist mit dem Druckkopf 4 bzw. dessen Einlass verbunden. Bei einer zirkulierenden Tintenversorgung ist der Auslass des Druckkopfs zur Rückführung nicht verdruckter Tinte mit dem Einlass 20 verbinden. Die Vorrichtung umfasst auch eine Be- und/oder Entlüftung 25.

Die Tinte 30 bildet einen Vorrat 30a. Die Tinte weist eine (oben liegende) Oberfläche 31 zur Luft hin auf: eine ganz oder im Wesentlichen schaumfreie Oberfläche 31a (in der Nebenkammer) und eine potenziell schaumtragende Oberfläche 31b (in der Hauptkammer). Die Oberfläche 31 a bildet einen ersten Pegel 32; die Oberfläche 31b einen weiteren oder zweiter Pegel 33 (auf dem Schaum "sitzen" kann).

Die Vorrichtung 1 umfasst einen ersten Sensor 40. Dieser ist der Nebenkammer 13 zugeordnet, z.B. in dieser Kammer oben angeordnet. Die Vorrichtung umfasst einen weiteren, zweiten Sensor 41. Dieser ist der Hauptkammer 12 zugeordnet, z.B. in dieser Kammer oben angeordnet. Beide Sensoren sind bevorzugt Ultraschallsensoren und beide messen bevorzugt nach unten hin. Der erste Sensor misst den Pegel 32 und liefert einen ersten Pegelmesswert 42 (Abstands- oder Höhenwert). Der zweite Sensor misst den Pegel 33 und liefert einen weiteren, zweiten Pegelmesswert 43. Letzterer Messwert kann durch den Schaum 50 und/oder durch Blasen 51 verfälscht sein, insbesondere kann der Pegel als zu hoch gemessen werden, d.h. tatsächlich tiefer (unter dem Schaum) liegen. Außer dem Pegel können die Höhe (des Schaums) 52 und die Art (des Schaums) 53 bestimmt werden. Hierzu werden die beiden Pegelmesswerte über (nicht dargestellte Verbindungen) an einen Rechner 60 übertragen und von diesem rechentechnisch verarbeitet.

Beim Vergleich der beiden Figuren wird deutlich, dass in Figur 1 in der Hauptkammer 12 kein Schaum 50 am Ort der Messung vorhanden ist, während in Figur 2 dort Schaum vorhanden ist. Der Schaum kann sich mit der in der Hauptkammer strömenden Tinte 30 zum Messort bewegen. Der Rechner 60 berechnet aus den Messwerten der beiden Sensoren 40 und 41 die jeweilige aktuelle Situation hinsichtlich der Schaumbildung. In der in Figur 2 gezeigten Situation erkennt das Messsystem (Sensoren und Rechner) den bereits gebildeten Schaum und leitet eine Maßnahme, z.B. eine Warnung, ein.

### Bezugszeichenliste

- 1: Vorrichtung
- 2: Tintenversorgungseinrichtung
- 3: Tintendruckmaschine
- 4: Druckkopf
- 5: Bedruckstoff
- 6: Tinte

- 10: Gehäuse
- 11: Trennwand
- 12: erste Kammer oder Hauptkammer oder Vorratsbehälter
- 13: zweite Kammer oder Nebenkammer
- 14: Öffnung

- 20: Einlass
- 21: Auslass
- 22: Zuleitung
- 23: Rohrstück
- 24: Ableitung
- 25: Be- und/oder Entlüftung

- 30: Tinte
- 30a: Vorrat
- 31: Oberfläche,
- 31a: Oberfläche, schaumfrei
- 31b: Oberfläche, potenziell schaumtragend
- 32: erster Pegel
- 33: weiterer oder zweiter Pegel

- 40: erster Sensor
- 41: weiterer oder zweiter Sensor
- 42: erster Pegelmesswert
- 43: weiterer oder zweiter Pegelmesswert

- 50: Schaum
- 51: Blasen
- 52: Höhe (des Schaums)
- 53: Art (des Schaums)

- 60: Rechner

## Patentansprüche

1. Vorrichtung zum Messen des Pegels einer schaumbildenden Tinte für eine Tintendruckmaschine, umfassend zwei mit der Tinte (30) befüllbare und zum Austausch der Tinte miteinander über eine Öffnung (14) verbundene Kammern (12, 13), d.h. eine erste Kammer (12) als Hauptkammer (12) und eine zweite Kammer (13) als Nebenkammer (13), wobei die Hauptkammer einen Tintenvorrat (30a) aufnimmt und der Nebenkammer ein Sensor (40) zugeordnet ist, welcher einen Pegel (32) einer schaumfreien Oberfläche (31, 31a) der Tinte in der Nebenkammer, d.h. einen Pegelmesswert (42), misst,
**dadurch gekennzeichnet,**
**dass** der ersten Kammer (12) entweder ebenfalls der Sensor (40) oder ein weiterer Sensor (41) zugeordnet ist, wobei der Sensor oder der weitere Sensor einen weiteren Pegel (33) einer potentiell Schaum tragenden Oberfläche (31, 31b) der Tinte (30) in der Hauptkammer, d.h. einen weiteren Pegelmesswert (43), misst; und
**dass** ein Rechner (60) vorhanden ist, welcher den Pegelmesswert (42) und den weiteren Pegelmesswert (43) zur Bestimmung des Vorhandenseins von Schaum (50), der Höhe (52) eines vorhandenen Schaums und/oder der Art (51) eines vorhandenen Schaums rechentechnisch verarbeitet.

2. Vorrichtung nach Anspruch 1,
**dadurch gekennzeichnet,**
**dass** beide Sensoren (40, 41) als Ultraschallsensoren ausgebildet sind.

3. Vorrichtung nach Anspruch 2,
**dadurch gekennzeichnet,**
**dass** beide Sensoren (40, 41) oberhalb der beiden Oberflächen (31, 31a, 31b) angeordnet sind.

4. Vorrichtung nach einem der vorhergehenden Ansprüche,
**dadurch gekennzeichnet,**
**dass** zwischen den beiden Kammern (12, 13) eine Trennwand (11) vorhanden ist.

5. Vorrichtung nach Anspruch 4,
**dadurch gekennzeichnet,**
**dass** die Öffnung (14) in der Trennwand (11) und unter beiden Oberflächen (31, 31a, 31b) der Tinte (30) gebildet ist.

6. Vorrichtung nach einem der vorhergehenden Ansprüche,
**dadurch gekennzeichnet,**
**dass** die Hauptkammer (12) eine Zuleitung (20) und eine Ableitung (21) für die Tinte (30) aufweist.

7. Vorrichtung nach Anspruch 6,
**dadurch gekennzeichnet,**
**dass** die Ableitung (21) mit einem Druckkopf (4) verbunden ist.

8. Vorrichtung nach einem der vorhergehenden Ansprüche,
**dadurch gekennzeichnet,**
**dass** der Rechner (60) wenigstens den weiteren Pegelmesswert (43) zur Bestimmung des Vorhandenseins von Schaum (50), der Höhe (52) eines vorhandenen Schaums und/oder der Art (51) eines vorhandenen Schaums rechentechnisch integriert.

9. Vorrichtung nach einem der vorhergehenden Ansprüche,
**dadurch gekennzeichnet,**
**dass** die erste Kammer (12) als ein Vorratsbehälter (12) für Tinte (30) einer Tintendruckmaschine (3) ausgebildet ist.

10. Vorrichtung nach einem der vorhergehenden Ansprüche,
**dadurch gekennzeichnet,**
**dass** die Vorrichtung (1) Teil einer Tintenversorgungseinrichtung (2) für eine Tintendruckmaschine (3) ist.

## Claims

1. Device for measuring the level of a foam-creating ink for an ink printing machine, comprising two chambers (12, 13) fillable with the ink (30) and connected to one another via an opening (14) for exchanging ink between one another, i.e. a first chamber (12) as a main chamber (12) and a second chamber (13) as an auxiliary chamber (13), the main chamber receiving an ink supply (30a) and the auxiliary chamber being assigned a sensor (40) for measuring a level (32) of a foam-free surface (31, 31a) of the ink in the auxiliary chamber, i.e. to obtain a measured level value (42),
**characterized**
**in that** the first chamber (21) is assigned either the sensor (40) as well or a further sensor (41), the sensor or the further sensor measuring a further level (33) of a potentially foam-carrying surface (31, 31b) of the ink (30) in the main chamber, i.e. a further measured level value (43); and
**in that** a computer (60) is provided computationally to process the measured level value (42) and the further measured level value (43) to determine the presence of any foam (50), the thickness (52) of any foam that is present, and/or the type (51) of any foam that is present.

2. Device according to claim 1,
**characterized**
**in that** both sensors (40, 41) are designed as ultrasound sensors.

3. Device according to claim 2,
**characterized**
**in that** both sensors (40, 41) are disposed above the two surfaces (31, 31a, 31b).

4. Device according to any one of the preceding claims,
**characterized**
**in that** a dividing wall (11) is provided between the two chambers (12, 13).

5. Device according to claim 4,
**characterized**
**in that** the opening (14) is formed in the dividing wall (11) and below both of the surfaces (31, 31a, 31b) of the ink (30).

6. Device according to any one of the preceding claims,
**characterized**
**in that** the main chamber (12) has a supply line (20) and a drain (21) for the ink (30).

7. Device according to claim 6,
**characterized**
**in that** the drain (21) is connected to a print head (4).

8. Device according to any one of the preceding claims,
**characterized**
**in that** the computer (60) computationally integrates at least the further measured level value (43) to determine the presence of foam (50), the height (52) of any foam that is present, and/or the type (51) of any foam that is present.

9. Device according to any one of the preceding claims,
**characterized**
**in that** the first chamber (12) is a reservoir (12) of ink (30) for an ink printing machine (3).

10. Device according to any one of the preceding claims,
**characterized**
**in that** the device (1) is part of an ink supply device (2) for an ink printing machine.

## Revendications

1. Dispositif de mesure de niveau d'une encre formant de la mousse pour une machine à imprimer à encre, comprenant deux chambres (12, 13) pouvant être remplies avec l'encre (30) et reliées entre elles via un orifice (14) pour le remplacement de l'encre, à savoir une première chambre (12) en tant que chambre principale (12) et une deuxième chambre (13) en tant que chambre secondaire (13), la chambre principale contenant une réserve d'encre (30a) et un capteur (40) étant associé à la chambre secondaire, ce capteur mesurant un niveau (32) d'une surface non moussante (31, 31a) de l'encre dans la chambre secondaire, soit une valeur de mesure de niveau (42)
**caractérisé en ce**
**que** la première chambre (12) est associée soit également au capteur (40), soit à un autre capteur (41), le capteur ou l'autre capteur mesurant un autre niveau (33) d'une surface potentiellement porteuse de mousse (31, 31b) de l'encre (30) dans la chambre principale, soit une autre valeur de mesure de niveau (43), et en ce qu'il existe un ordinateur (60) qui traite par le calcul la valeur de mesure de niveau (42) et l'autre valeur de mesure de niveau (43) pour déterminer la présence de mousse (50), la hauteur (52) d'une mousse existante et/ou le type (51) d'une mousse existante.

2. Dispositif selon la revendication 1,
**caractérisé en ce**
**que** les deux capteurs (40, 41) sont conçus comme capteurs à ultrasons.

3. Dispositif selon la revendication 2,
**caractérisé en ce**
**que** les deux capteurs (40, 41) sont disposés au-dessus des deux surfaces (31, 31a, 31b).

4. Dispositif selon l'une des revendications précédentes,
**caractérisé en ce**
**qu'**il existe une tôle de séparation (11) entre les deux chambres (12, 13).

5. Dispositif selon la revendication 4,
**caractérisé en ce**
**que** l'orifice (14) est réalisé dans la tôle de séparation (11) et sous les deux surfaces (31, 31a, 31b) de l'encre (30).

6. Dispositif selon l'une des revendications précédentes,
**caractérisé en ce**
**que** la chambre principale (12) présente une conduite d'amenée (20) et une conduite d'évacuation (21) pour l'encre (30).

7. Dispositif selon la revendication 6,
**caractérisé en ce**
**que** la conduite d'évacuation (21) est reliée à une tête d'impression (4).

8. Dispositif selon l'une des revendications précédentes,
**caractérisé en ce**
en ce que l'ordinateur (60) intègre par le calcul au moins l'autre valeur de mesure de niveau (43) pour déterminer la présence de mousse (50), la hauteur (52) d'une mousse existante et/ou le type (51) d'une mousse existante.

9. Dispositif selon l'une des revendications précédentes,
**caractérisé en ce**
**que** la première chambre (12) est conçue comme un réservoir (12) pour l'encre (30) d'une machine à imprimer à encre (3).

10. Dispositif selon l'une des revendications précédentes,
**caractérisé en ce**
**que** le dispositif (1) constitue une partie d'un dispositif d'alimentation en encre (2) pour une machine à imprimer à encre (3).
